# EUROPÄISCHE PATENTSCHRIFT

(11) **EP 0 306 907 B1**
(45) Veröffentlichungstag und Bekanntmachung des Hinweises auf die Patenterteilung: **27.01.1993**
(21) Anmeldenummer: 88114560.1
(22) Anmeldetag: 07.09.1988
(51) Int. Cl.: G07C 5/12

(54) **Fahrtschreiber für Kraftfahrzeuge**
Tachograph for motor vehicles
Tachygraphe pour véhicules automobiles

(30) Priorität: 09.09.1987 DE 3730216
(43) Veröffentlichungstag der Anmeldung: 15.03.1989
(73) Patentinhaber: Moto Meter AG, D-71229 Leonberg (DE)
(72) Erfinder:
(74) Vertreter: Behrens, Ralf Holger, Dipl.-Phys.

(56) Entgegenhaltungen:
- DE-A- 1 056 401
- DE-A- 2 444 567
- US-A- 3 434 152

## Beschreibung

Die Erfindung betrifft einen Fahrtschreiber für Kraftfahrzeuge mit einem Gehäuse, mit im Gehäuse angeordneten Meßinstrumenten, einschließlich Geschwindigkeitsmesser und Zeituhr, wobei die Meßinstrumente Zifferblätter und Zeiger umfassen und Schreibstifte antreiben, mit einer schwenkbar am Gehäuse gelagerten Trägerplatte und mit einem drehbar auf der Trägerplatte gelagerten, von der Zeituhr drehend angetriebenen Diagrammscheibenträger zum Festspannen wenigstens einer Diagrammscheibe, auf der im Betriebszustand des Fahrtschreibers von den Schreibstiften Meßwerte aufgezeichnet werden, wobei der Diagrammscheibenträger mit der Trägerplatte im Betriebszustand des Fahrtschreibers in einer separaten, zu den Zifferblättern räumlich versetzten Kammer des Gehäuses angeordnet und im Außer-Betriebszustand des Fahrtschreibers mit der Trägerplatte aus dem Gehäuse herausschwenkbar ist.

Ein solcher Fahrtschreiber ist beispielsweise in der älteren deutschen Patentanmeldung P 36 26 892.5 beschrieben. Dabei ist zwischen einem aus dem Gehäuse herausschiebbaren Diagrammscheibenträger und der Zeituhr auch eine Teleskopstange vorgesehen, welche die Getriebeverbindung zwischen Zeituhr und Diagrammscheibe auch im ausgeschobenen Zustand des Diagrammscheibenträgers aufrecht erhält, während andererseits bei einer ebenfalls in dieser Anmeldung beschriebenen, schwenkbaren Trägerplatte des Diagrammscheibenträgers die Anordnung so ist, daß die Trägerplatte um eine Achse verschwenkbar ist, die sicherstellt, daß ein Zahnradeingriff mit dem Uhrwerk der Zeituhr und somit der zeitgenaue Antrieb der Diagrammscheibe auch im herausgeschwenkten Zustand der Trägerplatte nicht beeinträchtigt ist.

Die letztgenannte Ausbildung hat den Nachteil, daß die Schwenkachse der Trägerplatte in der Nähe der Zeituhr liegen muß, wodurch dem Konstrukteur in der Gestaltung des Fahrtschreibers unerwünschte Beschränkungen auferlegt sind.

Es ist Aufgabe der Erfindung, eine Getriebeverbindung zwischen der Zeituhr und der schwenkbaren Trägerplatte so auszubilden, daß die Trägerplatte auch in größerer Entfernung von der Zeituhr angeordnet werden kann.

Die Aufgabe wird erfindungsgemäß durch folgende Merkmale gelöst:
a) ein Ausgangsrad der Zeituhr kämmt mit einem Zwischenrad, dessen Drehachse quer zur Drehachse des Ausgangsrades verläuft;
b) das Zwischenrad ist in einem ersten Gehäuseteil gelagert, der um die Drehachse des Ausgangsrades schwenkbar ist;
c) das Zwischenrad ist über eine Teleskopstange mit einem Getrieberad drehschlüssig verbunden, das in einem zweiten Gehäuseteil gelagert ist und ein Antriebsrad des Diagrammscheibenträgers antreibt;
d) der zweite Gehäuseteil ist um die Achse des Diagrammscheibenträgers schwenkbar;
e) die Schwenkachsen der Gehäuseteile liegen parallel zur Schwenkachse des Diagrammscheibenträgers;
f) die Schwenkachse der Teleskopstange verläuft parallel zur Schwenkachse des Diagrammscheibenträgers.

Die nachstehende Beschreibung einer bevorzugten Ausführungsform der Erfindung dient im Zusammenhang mit beiliegender Zeichnung der weiteren Erläuterung. Es zeigen:
- Figur 1 eine Schnittansicht eines Fahrtschreibers mit ausgeschwenktem Diagrammscheibenträger;
- Figur 2 eine Ansicht in Richtung des Pfeiles A in Figur 1;
- Figur 3 eine Ansicht ähnlich Figur 2 mit eingeschwenktem Diagrammscheibenträger;
- Figur 4 eine geschnittene Einzelansicht eines Diagrammscheibenträgers;
- Figur 5 eine Draufsicht des Diagrammscheibenträgers aus Figur 4 und
- Figur 6 eine Explosionsansicht des Diagrammscheibenträgers mit Spanneinrichtung für eine Diagrammscheibe.

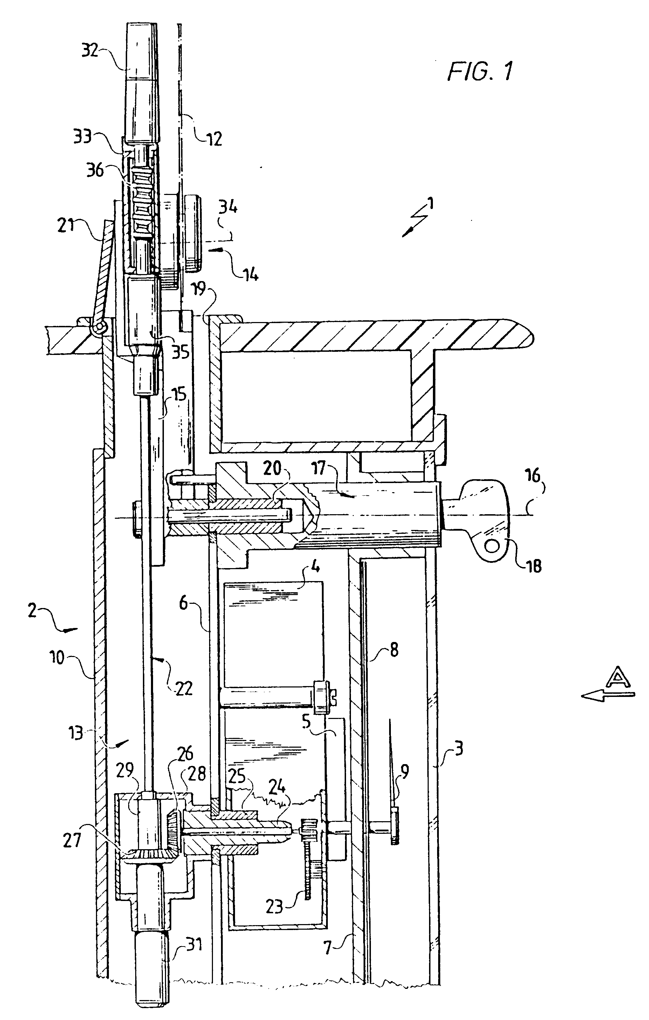

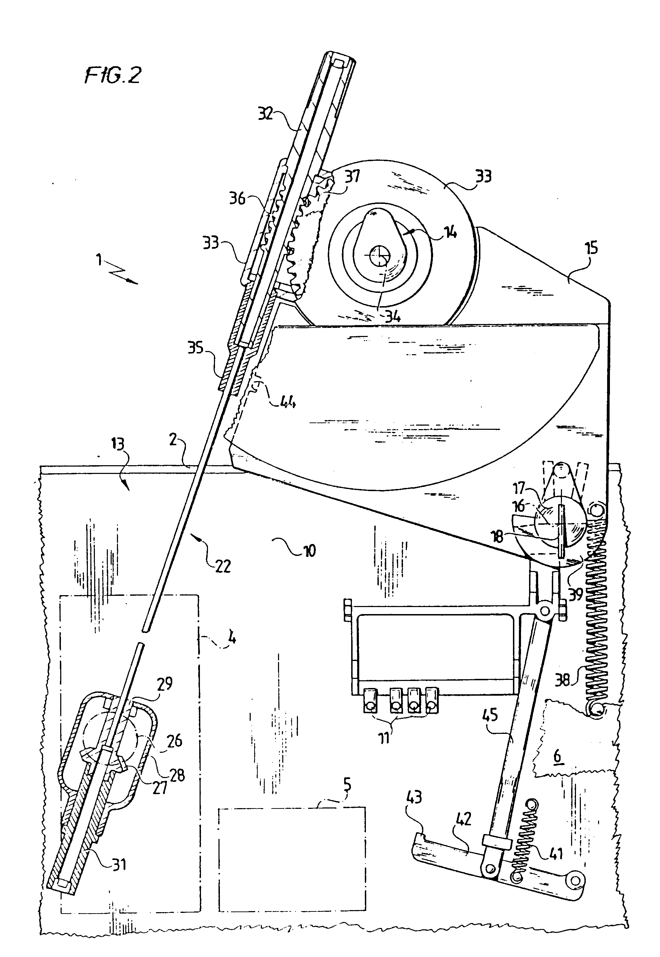

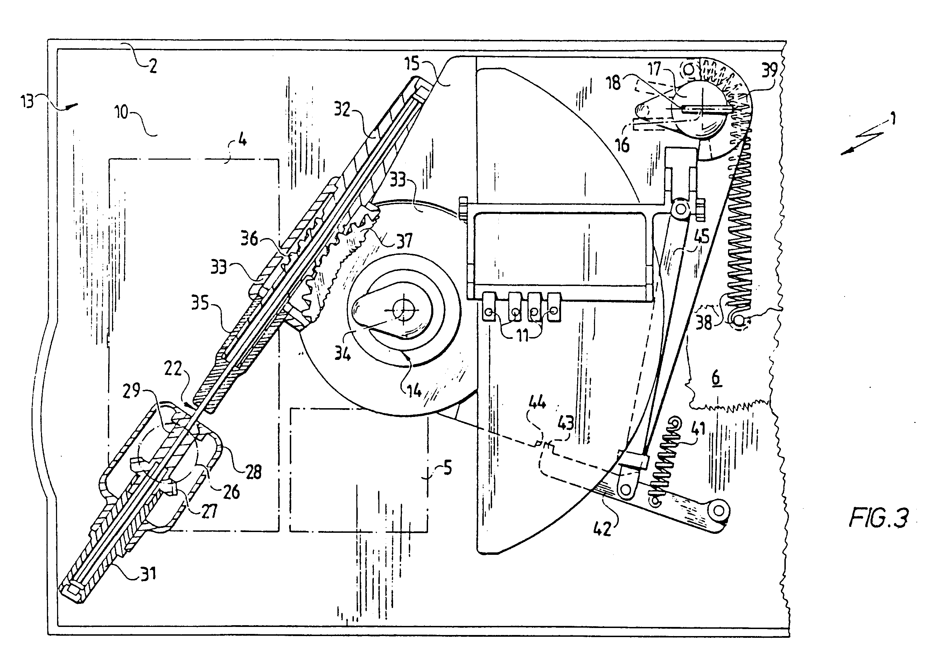

Ein auf der Zeichnung dargestellter Fahrtschreiber1für Kraftfahrzeuge weist ein Gehäuse 2 auf, an dessen Vorderseite eine durchsichtige Frontscheibe 3 angeordnet ist. Im Gehäuse 2 sind in herkömmlicher Weise Meßinstrumente, beispielsweise Geschwindigkeitsmesser, Wegstreckenzähler, Zeituhr angeordnet. In Figur 1, 2 und 3 sind eine Zeituhr 4 und ein Geschwindigkeitsmesser 5 schematisch angedeutet. Die Meßinstrumente, z. B. die Zeituhr 4 sind an einer im Inneren des Gehäuses befindlichen Platine 6 festgeschraubt. In einem Raum zwischen der Frontplatte 3 und einer weiteren Gehäusewand 7 ist mit letzterer verbunden ein aus mehreren Einzelzifferblättern für die einzelnen Meßinstrumente bestehendes Zifferblatt 8 vorgesehen, über welchem Zeiger 9 spielen, die ihrerseits von den einzelnen Meßinstrumenten, beispielsweise der Zeituhr 4, angetrieben sind. Die Meßinstrumente treiben ferner in ebenfalls an sich bekannter und daher nicht eigens dargestellter Weise Schreibstifte 11 (Figur 2 und 3) an, die der Aufzeichnung von Meßwerten auf einer später noch zu beschreibenden, drehend angetriebenen Diagrammscheibe 12 (Figur 1) dienen.

In Gehäuse 2 ist eine Kammer 13 vorgesehen, die von der Platine 6 und einer Gehäuserückwand 10 begrenzt ist und im Betriebszustand des Fahrtschreibers (Figur 3) einen die Diagrammscheibe 12 festspannenden Diagrammscheibenträger 14 aufnimmt. Der Diagrammscheibenträger 14 ist drehbar auf einer Trägerplatte 15 gelagert, die um eine Drehachse 16 schwenkbar im Gehäuse 2 derart gelagert ist, daß sie im Betriebszustand des Fahrtschreibers gemeinsam mit dem Diagrammscheibenträger 14 in die Kammer 13 einschwenkbar und im Außer-Betriebszustand des Fahrtschreibers nach oben aus dem Fahrtschreiber 1 herausschwenkbar ist, so daß ein Diagrammscheibenwechsel vorgenommen werden kann. Im Gehäuse 2 ist um die Achse 16 drehbar ein Schloß 17 angeordnet, welches durch einen Schlüssel 18 so betätigt werden kann, daß es um die Achse 16 schwenkbar ist. Die Trägerplatte 15 ist mit einem Schloßkörper 20 des Schlosses 17 verbunden , so daß sie sich nach Betätigen des Schlüssels 18 und Verdrehen des Schloßkörpers 20 zusammen mit diesem verschwenkt.

Wie aus Figur 1 ersichtlich, weist das Gehäuse 2 an seiner Oberseite einen Schlitz 19 mit Klappdeckel 21 auf, durch welchen der Diagrammscheibenträger 14 mit der Diagrammscheibe 12 aus dem Gehäuse 2 herausbewegbar ist. Beim Wiedereinschwenken des Diagrammscheibenträgers 14 in das Gehäuse 2 schließt sich der Deckel 21 automatisch.

Wie insbesondere aus Figur 2 und 3 hervorgeht, liegt die im Schloß 17 gelegene Drehachse 16 der Trägerplatte 15 räumlich verhältnismäßig weit von der den diagrammscheibenträger 14 antreibenden Zeituhr 4 entfernt. Es ist daher erforderlich, zwischen Zeituhr 4 und Diagrammscheibenträger 14 eine Getriebeverbindung herzustellen, die einerseits die Entfernung zwischen diesen Teilen überbrückt und außerdem das Verschwenken des Diagrammscheibenträgers 14 zusammen mit der Trägerplatte 15 zuläßt, ohne hierdurch den zeitgenauen Antrieb des Diagrammscheibenträgers 14 zu beeinträchtigen. Hierzu dient im wesentlichen eine zwischen der Zeituhr 4 und dem Diagrammscheibenträger 14 vorgesehene Teleskopstange 22, die nachfolgend im einzelnen beschrieben wird.

Wie aus Figur 1 ersichtlich, treibt ein übliches, dem Antrieb des Minutenzeigers der Zeituhr 4 dienendes Wechselrad 23 unmittelbar eine Welle 24 zeitgenau an, die mittels einer Buchse 25 im Gehäuse 2 drehbar gelagert ist. Das in die Kammer 13 vorstehende Ende der Welle 24 trägt ein Kegelrad 26, das mit einem weiteren Kegelrad 27 kämmt. Die Drehachse des Kegelrades 27 verläuft dabei quer, nämlich senkrecht zur Drehachse (Welle 24) des Kegelrades 26. Das Kegelrad 26 bildet ein Ausgangsrad der Zeituhr 4, das Kegelrad 27 wirkt als Zwischenrad.

Um die Buchse 25 und damit um die Welle 24 ist drehbar ein erster Gehäuseteil 28 gelagert, welcher der Drehlagerung des Kegelrades 27 dient. Hierzu weist dieses eine beidseits verlängerte Nabe 29 auf, die einerseits im Gehäuseteil 28 und andererseits in einer fest mit dem Gehäuseteil 28 verbundenen Büchse 31 drehend gelagert ist. Somit kann das Kegelrad 27 gemeinsam mit dem Gehäuseteil 28 verschwenkt werden, wobei das Kegelrad 27 auf dem Kegelrad 26 abläuft. Nabe 29 und Buchse 31 sind hohl ausgebildet und nehmen axial gleitverschieblich das eine Ende der bereits erwähnten Teleskopstange 22 auf.

Die Teleskopstange 22 ist mit ihrem anderen Ende in einer weiteren Buchse 32 axial gleitverschieblich, die an einem zweiten Gehäuseteil 33 drehbar gelagert ist. Der zweite Gehäuseteil 33 ist seinerseits um die Drehachse 34 des Diagrammscheibenträgers 14 schwenkbar. Wie dargestellt, ist die Buchse 32 an ihrem unteren Ende fest mit einer weiteren Buchse 35 verbunden, die sich zusammen mit der Buchse 32 im zweiten Gehäuseteil 33 dreht. Die Querschnittsfläche der Teleskopstange 22 ist von polygonaler, beispielsweise quadratischer, Form. Die Hohlräume in der Nabe 29 und der Buchse 35 sind von komplementärer Gestalt, so daß diese Teile 29 und 35 drehschlüssig, jedoch gleitverschieblich mit der Teleskopstange 22 verbunden sind. Hierdurch wird das vom Ausgangsrad (Kegelrad 26) vermittelte Drehmoment der Zeituhr 4 auf den Diagrammscheibenträger 14 übertragen. Die axiale Gleitverschieblichkeit der Teleskopstange in Nabe 29, Buchse 31, Buchse 32 sowie Buchse 35 ermöglicht dabei ohne Beeinträchtigung dieses Drehmoments das Verschwenken der Trägerplatte 15 mit Diagrammscheibenträger 14, wobei sich die beiden Gehäuseteile 28 und 33 in entsprechender Weise um die Welle24 bzw. die Drehachse 34 verschwenken.

Ein mittlerer Teil der Buchse 32 (Figur 2 und 3) ist als Schnecke 36 ausgebildet und steht in unmittelbarem Eingriff mit einem Schneckenrad 37, welches im zweiten Gehäuseteil 33 um die Achse 34 drehbar gelagert ist und die Diagrammscheibenaufnahme 14 unmittelbar trägt. Das Schneckenrad 37 ist somit das direkte Antriebsrad des Diagrammscheibenträgers 14.

Wie aus Figur 2 und 3 hervorgeht, ist eine Schraubenzugfeder 38 einerseits an der Platine 6 des Gehäuses 2 und andererseits an der Trägerplatte 15 befestigt und außerdem über eine übliche Führungskurve 39 geführt. Die Feder 38 spannt die Trägerplatte in die ausgeschwenkte Stellung vor. Eine von einer Feder 41 vorgespannte Klinke 42, die mit einer Nase 43 in eine Kerbe 44 der Trägerplatte 15 eingreift, hält letztere im eingeschwenkten Zustand fest (Figur 3). Die Klinke 42 ist über eine Betätigungsstange 45 in an sich bekannter Weise mit dem Schloß 17 gelenkig verbunden, so daß nach entsprechender Betätigung des Schlüssels 18 und Verdrehung des Schloßkörpers 20 die Klinke 42 zunächst außer Eingriff mit der Trägerplatte 15 gelangt und diese alsdann durch weitere Verdrehung des Schloßkörpers 20 aus dem Gehäuse 2 herausgeschwenkt werden kann.

Wie im Zusammenhang mit Figur 1 beschrieben, wird das vom Kegelrad 26 gebildete Ausgangsrad der Zeituhr 4, von welchem der Diagrammscheibenträger 14 angetrieben ist, direkt vom Wechselrad 23 der Zeituhr 4 angetrieben. Dies hat den Vorteil, daß beim Einschwenken des Diagrammscheibenträgers 14 in die Kammer 13 über die Teleskopstange 22 und die mit ihr verbundenen Getrieberäder ein Spiel im Uhrwerk der Zeituhr 4 beseitigt wird, so daß der Diagrammscheibenträger 14 stets zeitrichtig angetrieben ist. Den gleichen Zweck der Spielbeseitigung erreicht man auch, wenn zwischen Wechselrad 23 und der das Kegelrad 26 tragenden Welle 24 eine gerade Anzahl von Zwischenzahnrädern angeordnet ist.

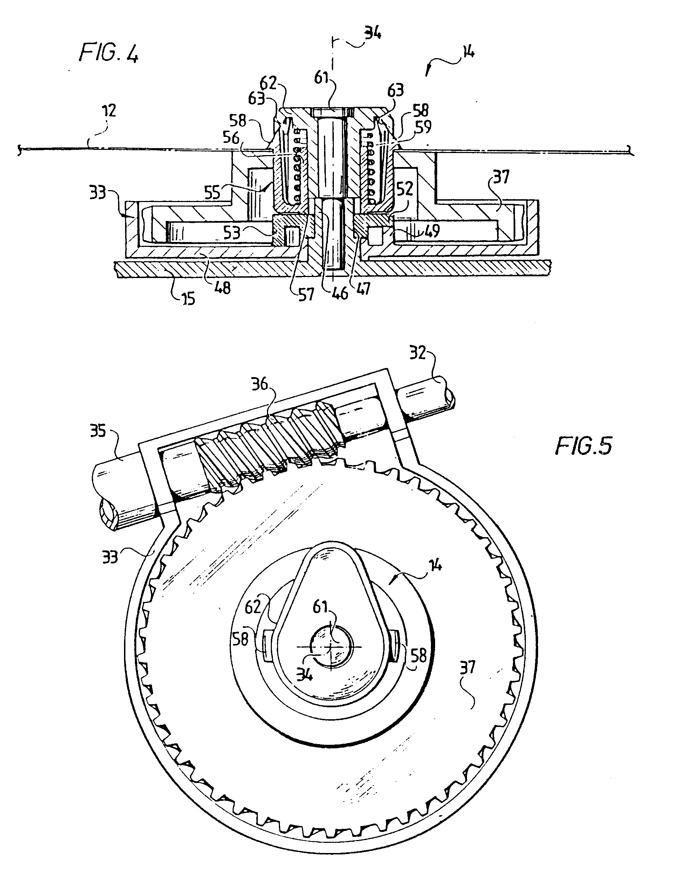

Die mit Hilfe der Teleskopstange 22 und den schwenkbaren Gehäuseteilen 28 und 33 erreichte Getriebeverbindung zwischen Zeituhr 4 und Diagrammscheibenträger 14 und die hierdurch bedingte Relativbewegung zwischen dem zweiten Gehäuseteil 33 und der Trägerplatte 15 wird weiterhin dazu ausgenutzt, die Diagrammscheibe 12 auf dem Diagrammscheibenträger 14 festzuspannen oder freizugeben. Dies wird nachfolgend im Zusammenhang mit Figur 4 bis 6 beschrieben.

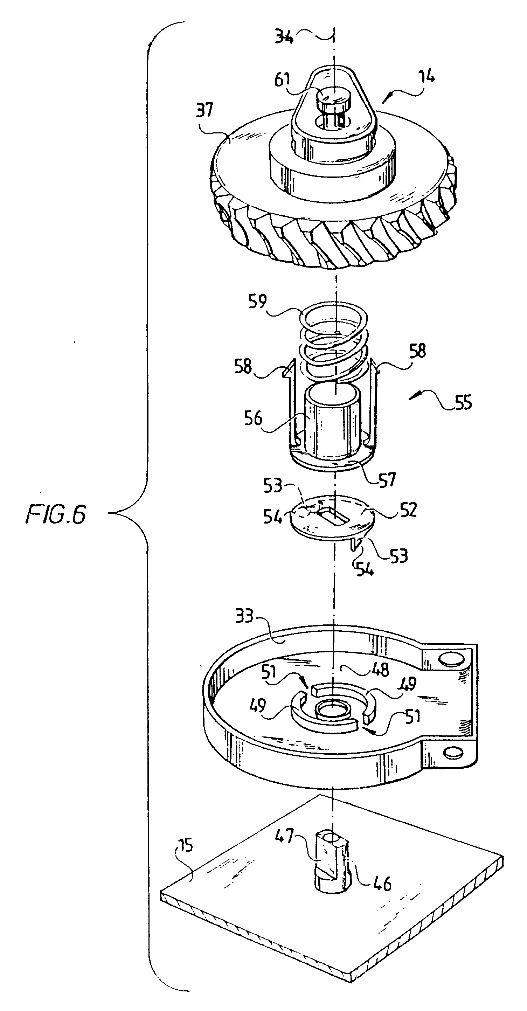

Von der Trägerplatte 15 steht einstückig ein Hohlzapfen 46 in Richtung des Diagrammscheibenträgers 14 ab, der an seinem freien Ende , als Zweiflach 47 (Figur 6) ausgebildet ist. Auf den unteren , kreisrunden Teil des Zapfens 46 ist der zweite Gehäuseteil 33 aufgeschoben, so daß er sich um die Drehachse 34 des Diagrammscheibenträgers 14 drehen kann. Vom Boden 48 des Gehäuseteils 33 stehen nach einwärts zwei etwa halbkreisförmige Stege 49 ab, die mit ihren Stirnenden zwei Schlitze 51 zwischen sich begrenzen. Auf dem Zweiflach 47 des Hohlzapfens 46 ist ein scheibenförmiges Nockenglied 52 gleitverschieblich, jedoch unverdrehbar aufgeschoben, vom dem nach unten Nasen 53 mit Schrägflächen 54 abstehen, die normalerweise in den Schlitzen 51 liegen. Auf dem Nockenglied 52 sitzt ein Spannteil 55 mit zylindrischer Innenbuchse 56 und zwei von einem Bund 57 abstehenden Spannklauen 58. In den Raum zwischen den Spannklauen 58 und Innenbuchse 56 greift eine Schraubendruckfeder 59 ein. Über diese Anordnung ist das einstückig mit dem Diagrammscheibenträger 14 verbundene Schneckenrad 37 gestülpt. Ein Bolzen 61 hält die ganze Anordnung zusammen und vermittelt gleichzeitig die Drehbarkeit von Schneckenrad 37 und Diagrammscheibenträger 14.

Der Diagrammscheibenträger 14 weist zwei seitliche Öffnungen auf, durch welche die hakenartig ausgebildeten Enden der Spannklauen 58 seitlich austreten können, um eine oder zwei Diagrammscheiben 12 zwischen sich und einer entsprechenden Auflagefläche des Diagrammscheibenträgers 14 festzuspannen (Figur 4). Die erforderliche Festspannkraft wird von der Feder 59 vermittelt.

Um die Diagrammscheibe 12 abnehmen zu können, müssen die Spannklauen 58 in das Innere des Diagrammscheibenträgers 14 geführt werden. Hierzu weist eine obere Wand 62 des Diagrammscheibenträgers zwei Schrägflächen 63 auf, die mit entsprechenden Schrägflächen und den Spannklauen 58 derart zusammenwirken, daß beim Verschieben des Spanngliedes 55 gegen die Wirkung der Feder 59 (in Figur 4 nach oben) die Spannklauen eingezogen werden und die Diagrammscheibe 12 freigeben. Diese Bewegung wird von dem Nockenglied 52 beim Ausschwenken der Trägerplatte 15 vermittelt, wenn hierbei die bereits erwähnte Relativbewegung zwischen Trägerplatte und Gehäuseteil 33 stattfindet. In diesem Falle gleiten nämlich die Schrägflächen 54 des drehfest mit der Trägerplatte 15 verbundenen Nockengliedes 52, die normalerweise in den Schlitzen 51 liegen, an den Kanten der Stege 49 auf, so daß das Nockenglied 52 in Gehäuse 33 angehoben wird und hierdurch das Spannteil mit den Klauen 48 anhebt, wodurch letztere, wie bereits beschrieben, die Diagrammscheibe 12 freigeben. Beim Einschwenken der Trägerplatte 15 in das Gehäuse 2 erfolgt die umgekehrte Bewegung, wobei die Feder 59 für die Zurückschiebung des Spannteils 55 und des Nockengliedes 52 sorgt, sodaß die elastischen Spannklauen 58 wieder seitlich austreten.

## Patentansprüche

1. Fahrtschreiber (1) für Kraftfahrzeuge mit einem Gehäuse (2), mit im Gehäuse angeordneten Meßinstrumenten, einschließlich Geschwindigkeitsmesser (5) und Zeituhr (4), wobei die Meßinstrumente Zifferblätter (8) und Zeiger (9) umfassen und Schreibstifte (11) antreiben, mit einer schwenkbar am Gehäuse gelagerten Trägerplatte (15) und mit einem drehbar auf der Trägerplatte gelagerten, von der Zeituhr drehend angetriebenen Diagrammscheibenträger (14) zum Festspannen wenigstens einer Diagrammscheibe (12), auf der im Betriebszustand des Fahrtschreibers von den Schreibstiften Meßwerte aufgezeichnet werden, wobei der Diagrammscheibenträger mit der Trägerplatte im Betriebszustand des Fahrtschreibers in einer separaten, zu den Zifferblättern räumlich versetzten Kammer (13) des Gehäuses angeordnet und im Außer-Betriebszustand mit der Trägerplatte aus dem Gehäuse herausschwenkbar ist, gekennzeichnet durch folgende Merkmale:
a) ein Ausgangsrad (26) der Zeituhr (4) kämmt mit einem Zwischenrad (27), dessen Drehachse quer zur Drehachse (24) des Ausgangsrades (26) verläuft;
b) das Zwischenrad (27) ist in einem ersten Gehäuseteil (28) gelagert, der um die Drehachse (24) des Ausgangsrades (26) schwenkbar ist;
c) das Zwischenrad (27) ist über eine Teleskopstange (22) mit einem Getrieberad (36) drehschlüssig verbunden, das in einem zweiten Gehäuseteil (33) gelagert ist und ein Antriebsrad (37) des Diagrammscheibenträgers (14) antreibt;
d) der zweite Gehäuseteil (33) ist um die Drehachse (34) des Diagrammscheibenträgers (14) schwenkbar;
e) die Schwenkachsen (24, 34) der Gehäuseteile (28 bzw. 33) liegen parallel zur Schwenkachse (16) des Diagrammscheibenträgers (14);
f) die Schwenkachse (24) der Teleskopstange (22) verläuft parallel zur Schwenkachse (16) des Diagrammscheibenträgers (14).

2. Fahrtschreiber nach Anspruch 1, dadurch gekennzeichnet, daß das Ausgangsrad (26) unmittelbar oder unter Zwischenschaltung einer geraden Anzahl von Zahnrädern von einem Wechselrad (23) der Zeituhr (4) angetrieben ist.

3. Fahrtschreiber nach Anspruch 1, dadurch gekennzeichnet, daß das Getrieberad (36) eine Schnecke ist, die mit einem den Diagrammscheibenträger (14) antreibenden Schneckenrad (37) kämmt.

4. Fahrtschreiber nach Anspruch 1, dadurch gekennzeichnet, daß mechanische Verbindungsglieder (47, 49, 52, 58, 59, 63) vorgesehen sind, die beim Verschwenken der Trägerplatte (15) und der damit über die Teleskopstange (22) ausgelösten Relativbewegung zwischen dem zweiten Gehäuseteil (33) und der Trägerplatte (15) die Diagrammscheibe (12) auf dem Diagrammscheibenträger (14) festspannen oder freigeben.

5. Fahrtschreiber nach Anspruch 4, dadurch gekennzeichnet, daß die Diagrammscheibe (12) durch ein Spannteil (55) eingespannt ist, und das Spannteil zum Festspannen oder Freigeben der Diagrammscheibe (12) durch ein Nockenglied (52) bewegbar ist, das seinerseits durch die Relativbewegung zwischen dem zweiten Gehäuseteil (33) und der Trägerplatte (15) angetrieben ist.

## Claims

1. Tachograph (1) for motor vehicles, having a housing (2), having measuring instruments, including a speedometer (5) and a clock (4), disposed in the housing, the measuring instruments comprising dials (8) and needles (9) and driving recording styli (11), having a bearer plate (15), pivotably mounted on the housing, and having a recording disc carrier (14), rotatably mounted on the bearer plate and rotationally driven by the clock, for clamping at least one recording disc (12), on which, in the operating state of the tachograph, measurement values are recorded by the recording styli, the recording disc carrier, in the operating state of the tachograph, being disposed with the bearer plate in a separate chamber (13) of the housing, spatially offset in relation to the dials, and, in the non-operating state, being able to be pivoted with the bearer plate out of the housing, characterised by the following features:
a) an output wheel (26) of the clock (4) meshes with an intermediate wheel (27), the rotational axis of which runs transversely to the rotational axis (24) of the output wheel (26);
b) the intermediate wheel (27) is mounted in a first housing part (28), which is pivotable about the rotational axis (24) of the output wheel (26);
c) the intermediate wheel (27) is connected in a rotationally locking manner, via a telescopic rod (22) to a gearwheel (36), which is mounted in a second housing part (33) and drives a drive wheel (37) of the recording disc carrier (14);
d) the second housing part (33) is pivotable about the rotational axis (34) of the recording disc carrier (14);
e) the swivel axes (24, 34) of the housing parts (28 or 33) lie parallel to the swivel axis (16) of the recording disc carrier (14);
f) the swivel axis (24) of the telescopic rod (22) runs parallel to the swivel axis (16) of the recording disc carrier (14).

2. Tachograph according to Claim 1, characterised in that the output wheel (26) is driven directly or, with the interposition of an even number of cogwheels, by a change wheel (23) of the clock (4).

3. Tachograph according to Claim 1, characterised in that the gear wheel (36) is a worm, which meshes with a worm wheel (37) driving the recording disc carrier (14).

4. Tachograph according to Claim 1, characterised in that mechanical connecting members (47, 49, 52, 58, 59, 63) are provided, which, upon the pivoting of the bearer plate (15) and the relative movement, thereby triggered via the telescopic rod (22), between the second housing part (33) and the bearer plate (15), clamp or release the recording disc (12) on the recording disc carrier (14).

5. Tachograph according to Claim 4, characterised in that the recording disc (12) is clamped in place by a clamping part (55) and, in order to clamp or release the recording disc (12), the clamping part can be moved by a cam member (52), which, for its part, is driven by the relative movement between the second housing part (33) and the bearer plate (15).

## Revendications

1. Tachygraphe (1) pour véhicules à moteur comprenant un boîtier (2), avec des instruments de mesure disposés dans le boîtier, y compris un tachymètre (5) et une horloge (4), dans lequel les instruments de mesure comprennent des cadrans (8) et des aiguilles (9) et axialement des inscripteurs (11), avec une plaque support (15) logée avec pivotement possible dans le boîtier et avec un porte disque diagramme (14) monté pour tourner sur la plaque support, entraîné en rotation par l'horloge et destiné à assurer la fixation d'au moins un disque diagramme (12), sur lequel dans l'état de marche du tachygraphe sont tracées des valeurs de mesure par les inscripteurs, le support du disque diagramme avec la plaque support étant placé à l'état de marche du tachygraphe dans une chambre (13) séparée du boîtier, décalée dans l'espace par rapport aux cadrans et pouvant pivoter hors du boîtier à l'état hors service du tachygraphe, tachygraphe caractérisé par les remarques suivantes:
a) un pignon de sortie (26) de l'horloge (4) engrène avec un pignon intermédiaire (27), dont l'axe de rotation est perpendiculaire à l'axe de rotation (24) du pignon de sortie (26),
b) le pignon intermédiaire (27) est logé dans une première pièce de boîtier (28), qui peut pivoter autour de l'axe de rotation (24) du pignon de sortie (26),
c) le pignon intermédiaire (27) est relié en liaison de rotation par une tige télescopique (22) à un pignon de transmission (36) qui est logé dans une deuxième pièce de boîtier (33) et entraîne un pignon de commande (37) du porte-disque diagramme,
d) la deuxième pièce de boîtier (33) peut pivoter autour de l'axe de rotation (34) du porte-disque diagramme (14),
e) les axes de pivotement (24, 34) des pièces de boîtier (28 ou 33) sont parallèles à l'axe de pivotement (16) du porte disque diagramme (14),
f) l'axe de pivotement (24) de la tige télescopique (22) s'étend parallèlement à l'axe de pivotement (16) du porte-disque diagramme (14).

2. Tachygraphe selon la revendication 1, caractérisé en ce que le pignon de sortie (26) est entraîné directement ou après interposition d'un nombre entier de roues dentées par un pignon de minuterie (23) de l'horloge (4).

3. Tachymètre selon la revendication 1, caractérisé en ce que le pignon de transmission (36) est une vis sans fin qui engrène avec un pignon (37), entraînant le porte disque diagramme (14).

4. Tachymètre selon la revendication 1, caractérisé en ce que des éléments de liaison mécaniques (47, 49, 52, 58, 59, 63) ont été prévus, qui lors du pivotement de la plaque support (15)et du mouvement relatif déclenché par la tige télescopique (22) entre la deuxième pièce de boîtier (33) et la laque support (15) bloquent ou libèrent le disque diagramme (12) sur le porte disque diagramme (14).

5. Tachygraphe selon la revendication 4, caractérisé en ce que le disque diagramme (12) est bloqué par une pièce de serrage (55), et la pièce de serrage est mobile sous l'action d'un élément de came (52) pour bloquer ou libérer le disque diagramme (12), élément de came qui de son côté est commandé par le mouvement relatif entre la deuxième pièce de boîtier (33) et la plaque support (15).
